# EUROPÄISCHE PATENTANMELDUNG

(11) **EP 2 282 273 A1**
(43) Veröffentlichungstag der Anmeldung: **09.02.2011**
(21) Anmeldenummer: 10007965.6
(22) Anmeldetag: 30.07.2010
(51) Int. Cl.: G06F 17/30

(54) **Erzeugung von über ein Mobilfunknetz erfolgenden Anfragen an Datenquellen in Kommunikationsnetzwerken sowie über ein Mobilfunknetz erfolgende Übermittlung von Antworten von Datenquellen in Kommunikationsnetzwerken auf entsprechende Anfragen**

(30) Priorität: 31.07.2009 DE 102009035720
(71) Anmelder: Vodafone Holding GmbH, 40213 Düsseldorf (DE)
(72) Erfinder: Seifert, Ulrich, 40468 Düsseldorf (DE); Pölk, Reinhard, 40547 Düsseldorf (DE); Hauf, Inna, 40545 Düsseldorf (DE); Grandt, Olaf, 44805 Bochum (DE)
(74) Vertreter: Ring & Weisbrodt

(57) **Zusammenfassung**

Die vorliegende Erfindung betrifft ein Verfahren zur zumindest teilautomatischen Erzeugung wenigstens einer Anfrage an wenigstens eine über ein Kommunikationsnetzwerk (7) erreichbare Datenquelle, wobei die wenigstens eine Anfrage von einem in einem Mobilfunknetz (1) betreibbaren Endgerät (6) mittels wenigstens eines Kommunikationsdienstes des Mobilfunknetzes (1) über das Mobilfunknetz (1) an die wenigstens eine Datenquelle gesendet wird, welches gekennzeichnet ist durch die folgenden Verfahrensschritte:
- Erfassung wenigstens einer Anfragedaten umfassenden Anfrage seitens des Endgerätes (6);
- Senden der wenigstens einen erfassten Anfrage von dem Endgerät (6) an das Mobilfunknetz (1) unter Nutzung einer dem Nutzer des Endgerätes (6) seitens des Mobilfunknetzes (1) eindeutig zugeordneten Nutzerkennung;
- automatische Anreicherung der Anfragedaten der wenigstens einen Anfrage mit seitens des Mobilfunknetzes (1) erfassten nutzerindividuellen personenbezogenen Daten des Nutzers des Endgerätes (6) unter Nutzung der dem Nutzer des Endgerätes (6) seitens des Mobilfunknetzes (1) eindeutig zugeordneten Nutzerkennung;
- Senden der mit den nutzerindividuellen personenbezogenen Daten des Nutzers des Endgerätes (6) angereicherten Anfrage von dem Mobilfunknetz (1) an die wenigstens eine über das Kommunikationsnetzwerk (7) erreichbare Datenquelle.

Ferner betrifft die vorliegende Erfindung ein Verfahren zur zumindest teilautomatischen Übermittlung wenigstens einer Antwort wenigstens einer über ein Kommunikationsnetzwerk (7) erreichbaren Datenquelle auf eine Anfrage nach einem der Ansprüche 1 bis 4 über das Mobilfunknetz (1) an das in dem Mobilfunknetz (1) betreibbare Endgerät (6) des Nutzers mittels wenigstens eines Kommunikationsdienstes des Mobilfunknetzes (1), welches gekennzeichnet ist durch die folgenden Verfahrensschritte:
- Empfang wenigstens einer Antwortdaten umfassenden Antwort seitens des Mobilfunknetzes (1);
- zumindest teilautomatische Auswertung und/oder Aufbereitung der Antwortdaten der wenigstens einen empfangenen Antwort seitens des Mobilfunknetzes (1), vorzugsweise unter Nutzung von seitens des Mobilfunknetzes (1) erfassten nutzerindividuellen verhaltens- und/oder ereignisbezogenen Daten des Nutzers des Endgerätes (6);
- Senden der ausgewerteten und/oder aufbereiteten Antwortdaten der wenigstens einen Antwort von dem Mobilfunknetz (1) an das Endgerät (6) mittels eines Kommunikationsdienstes des Mobilfunknetzes (1) unter Nutzung der dem Nutzer des Endgerätes (6) seitens des Mobilfunknetzes (1) eindeutig zugeordneten Nutzerkennung.

Gegenstand der Erfindung ist ferner Netzknoten in einem Mobilfunknetz (1), vorzugsweise einem Mobilfunknetz (1) gemäß einem GSM-, GPRS- und/oder UMTS-Funknetzstandard, welcher an einer erfindungsgemäßen zumindest teilautomatisch erfolgenden Erzeugung wenigstens einer Anfrage an wenigstens eine über ein Kommunikationsnetzwerk (7) erreichbare Datenquelle und/oder an einer erfindungsgemäß zumindest teilautomatisch erfolgenden Übermittlung wenigstens einer Antwort wenigstens einer über ein Kommunikationsnetzwerk (7) erreichbaren Datenquelle auf eine Anfrage zumindest teilweise beteiligt ist, **dadurch gekennzeichnet, dass** dieser ausgebildet und/oder eingerichtet ist ein erfindungsgemäßes Verfahren zumindest teilweise auszuführen.

## Beschreibung

Die vorliegende Erfindung betrifft ein Verfahren zur zumindest teilautomatischen Erzeugung wenigstens einer Anfrage an wenigstens eine über ein Kommunikationsnetzwerk erreichbare Datenquelle, wobei die wenigstens eine Anfrage von einem in einem Mobilfunknetz betreibbaren Endgerät mittels wenigstens eines Kommunikationsdienstes des Mobilfunknetzes über das Mobilfunknetz an die wenigstens eine Datenquelle gesendet wird.

Die vorliegende Erfindung betrifft ferner ein Verfahren zur zumindest teilautomatischen Übermittlung wenigstens einer Antwort wenigstens einer über ein Kommunikationsnetzwerk erreichbaren Datenquelle auf eine erfindungsgemäße Anfrage über das Mobilfunknetz an das in dem Mobilfunknetz betreibbare Endgerät des Nutzers mittels wenigstens eines Kommunikationsdienstes des Mobilfunknetzes.

Gegenstand der Erfindung ist ferner Netzknoten in einem Mobilfunknetz, vorzugsweise einem Mobilfunknetz gemäß einem GSM-, GPRS- und/oder UMTS-Funknetzstandard, welcher an einer erfindungsgemäßen zumindest teilautomatisch erfolgenden Erzeugung wenigstens einer Anfrage an wenigstens eine über ein Kommunikationsnetzwerk erreichbare Datenquelle und/oder an einer erfindungsgemäß zumindest teilautomatisch erfolgenden Übermittlung wenigstens einer Antwort wenigstens einer über ein Kommunikationsnetzwerk erreichbaren Datenquelle auf eine Anfrage zumindest teilweise beteiligt ist, **dadurch gekennzeichnet, dass** dieser ausgebildet und/oder eingerichtet ist ein erfindungsgemäßes Verfahren zumindest teilweise auszuführen.

Im Stand der Technik sind insbesondere im Zusammenhang mit dem Internet als über ein Kommunikationsnetzwerk erreichbare Datenquelle sogenannte Suchmaschinen für Anfragen nach interessierenden Informationen in Datenquellen bekannt. Eine entsprechende, recht bekannte Suchmaschine bzw. Suchfunktionalität wird beispielsweise von der Google Inc., USA unter der im Internet unter der Adresse google.com erreichbaren Homepage angeboten.

Ferner ist es bekannt, entsprechende Internetfunktionalitäten mit in einem Mobilfunknetz betreibbaren, vorzugsweise mobilen Endgerät zu nutzen, wobei eine Verbindung mit dem Internet über das Mobilfunknetz erfolgt.

Internetnutzer werden oftmals mit einer nahezu unüberschaubaren Menge an Informationen konfrontiert, welche häufig nicht die richtigen bzw. nicht die gewünschten Antworten auf die jeweiligen Fragen der jeweiligen Internetnutzer bieten. Damit wird das fortwährende Informationsbedürfnis der Internetnutzer nicht wirklich befriedigt. Im Einzelnen sind insbesondere folgende Probleme zu benennen:
- Informationsüberlastung und mangelnde Orientierung;
- hoher Zeitaufwand, um an die wirklich relevanten Informationen zu kommen und diese zu erfassen bzw. aufzunehmen;
- qualitative Defizite im Listening der Suchmaschinen;
- Suchmaschinen liefern zwar plausible Ergebnisse, aber bei weitem nicht immer die besten.

Die US 2007/0198505 A1 offenbart eine sogenannte Suchmaschine bzw. Suchmaschinenfunktionalität, wobei auf eine von einem in einem Mobilfunknetz betreibbaren mobilen Endgerät über das Mobilfunknetz gerichtete Anfrage an eine Datenquelle im Internet die Antworten auf die Anfrage zurückgeliefert werden, die in Bezug auf den Zeitpunkt der Anfrage als auch den Standort des für das mobile Endgerät zum Zeitpunkt der Anfrage zuständigen Netzknotens des Mobilfunknetzes für den Nutzer des mobilen Endgerätes relevant bzw. wahrscheinlich relevanter sind. Zwar werden bei der Lösung gemäß der US 2007/0198505 A1 entsprechend dem Zeitpunkt der Anfrage als auch dem Standort des für das mobile Endgerät zum Zeitpunkt der Anfrage zuständigen Netzknotens des Mobilfunknetzes relevante Antworten geliefert, diese berücksichtigen aber nicht die individuellen Vorlieben und Verhaltensweisen des Nutzers des Endgerätes, so dass die für den Nutzers des Endgerätes wirklich relevanten Informationen nach wie vor nur mit erhöhtem Zeitaufwand erfassbar bzw. aufnehmbar sind. Nachteilig ist darüber hinaus, dass mit der von einem in einem Mobilfunknetz betreibbaren mobilen Endgerät über das Mobilfunknetz gerichtete Anfrage an eine Datenquelle im Internet Informationen bezüglich des Nutzers des Endgerätes über das Internet an die Datenquelle übertragen werden. Entsprechende Informationen bezüglich des Nutzers des Endgerätes können demnach auch missbräuchlich Verwendung finden. Ferner findet eine entsprechende Informationspreisgabe in der Regel nicht das Einverständnis der Nutzer, sofern diesen die Reichweite und Gefahren entsprechender Informationspreisgaben bewusst sind.

Vor diesem Hintergrund liegt der vorliegenden Erfindung die Aufgabe zu Grunde, unter Meidung der vorbeschriebenen Nachteile des Standes der Technik die Erzeugung von über ein Mobilfunknetz erfolgende Anfragen an Datenquellen in Kommunikationsnetzwerken sowie die über ein Mobilfunknetz erfolgende Übermittlung von Antworten von Datenquellen in Kommunikationsnetzwerken auf entsprechende Anfragen zu verbessern, insbesondere hinsichtlich einer nutzerindividualisierten Antwortlieferung bei gleichzeitig verbessertem Schutz von Informationen bezüglich der Person des Nutzers.

Zur technischen Lösung dieser Aufgabe wird mit der vorliegenden Erfindung ein Verfahren zur zumindest teilautomatischen Erzeugung wenigstens einer Anfrage an wenigstens eine über ein Kommunikationsnetzwerk erreichbare Datenquelle, wobei die wenigstens eine Anfrage von einem in einem Mobilfunknetz betreibbaren Endgerät mittels wenigstens eines Kommunikationsdienstes des Mobilfunknetzes über das Mobilfunknetz an die wenigstens eine Datenquelle gesendet wird, vorgeschlagen, welches gekennzeichnet ist durch die folgenden Verfahrensschritte:
- Erfassung wenigstens einer Anfragedaten umfassenden Anfrage seitens des Endgerätes;
- Senden der wenigstens einen erfassten Anfrage von dem Endgerät an das Mobilfunknetz unter Nutzung einer dem Nutzer des Endgerätes seitens des Mobilfunknetzes eindeutig zugeordneten Nutzerkennung;
- automatische Anreicherung der Anfragedaten der wenigstens einen Anfrage mit seitens des Mobilfunknetzes erfassten nutzerindividuellen personenbezogenen Daten des Nutzers des Endgerätes unter Nutzung der dem Nutzer des Endgerätes seitens des Mobilfunknetzes eindeutig zugeordneten Nutzerkennung;
- Senden der mit den nutzerindividuellen personenbezogenen Daten des Nutzers des Endgerätes angereicherten Anfrage von dem Mobilfunknetz an die wenigstens eine über das Kommunikationsnetzwerk erreichbare Datenquelle.

Die Erfindung macht sich vorteilhafterweise die Erkenntnis zu Nutze, dass durch die erfindungsgemäße Anreicherung der Anfragedaten der Anfrage mit nutzerindividuellen personenbezogenen Daten des Nutzers des Endgerätes verbesserte Anfragen an Datenquellen erzeugbar sind, insbesondere hinsichtlich einer nutzerindividualisierten Antwortlieferung.

Vorteilhafterweise werden im Rahmen der automatischen Anreicherung der Anfragedaten der wenigstens einen Anfrage nutzerindividuelle personenbezogene Daten des Nutzers des Endgerätes unter Nutzung der dem Nutzer des Endgerätes seitens des Mobilfunknetzes eindeutig zugeordneten Nutzerkennung von bzw. aus einer nutzerindividuelle personenbezogene Daten des Nutzers des Endgerätes bereithaltenden Datenbank des Mobilfunknetzes abgerufen und vorzugsweise genutzt, wobei in der Datenbank des Mobilfunknetzes die nutzerindividuellen personenbezogenen Daten des Nutzers des Endgerätes der dem Nutzer des Endgerätes seitens des Mobilfunknetzes eindeutig zugeordneten Nutzerkennung zugeordnet sind.

Eine weitere vorteilhafte Ausgestaltung der Erfindung sieht vor, dass die mit den nutzerindividuellen personenbezogenen Daten des Nutzers des Endgerätes angereicherte Anfrage von dem Mobilfunknetz an die wenigstens eine über das Kommunikationsnetzwerk erreichbare Datenquelle frei von der dem Nutzer des Endgerätes seitens des Mobilfunknetzes eindeutig zugeordneten Nutzerkennung gesendet wird. So kann vorteilhafterweise sichergestellt werden, dass nutzerindividuelle personenbezogene Daten des Nutzers des Endgerätes nicht außerhalb des Vertrauens- und Datenschutzverhältnisses zwischen dem Nutzer des Endgerätes und dem Betreiber des Mobilfunknetzes verwendet werden können.

In einer weiteren vorteilhaften Ausgestaltung der Erfindung werden die Anfragedaten der wenigstens einen Anfrage mit den seitens des Mobilfunknetzes erfassten nutzerindividuellen personenbezogenen Daten des Nutzers des Endgerätes angereichert werden, wenn die seitens des Endgerätes erfasste Anfrage an eine Datenquelle seitens des Kommunikationsnetzwerks gerichtet werden soll, deren Betreiber in einer wirtschaftlichen, organisatorischen und/oder vertraglichen Verbindung mit dem Betreiber des Mobilfunknetzes steht. Erfindungsgemäß wird so eine weitere Verbesserung hinsichtlich der Sicherheit von nutzerindividuellen personenbezogene Daten des Nutzers des Endgerätes realisiert.

Zur technischen Lösung der eingangs genannte Aufgabe wird ferner ein Verfahren zur zumindest teilautomatischen Übermittlung wenigstens einer Antwort wenigstens einer über ein Kommunikationsnetzwerk erreichbaren Datenquelle auf eine erfindungsgemäß erfolgende Anfrage über das Mobilfunknetz an das in dem Mobilfunknetz betreibbare Endgerät des Nutzers mittels wenigstens eines Kommunikationsdienstes des Mobilfunknetzes, vorgeschlagen, welches gekennzeichnet ist durch die folgenden Verfahrensschritte:
- Empfang wenigstens einer Antwortdaten umfassenden Antwort seitens des Mobilfunknetzes;
- zumindest teilautomatische Auswertung und/oder Aufbereitung der Antwortdaten der wenigstens einen empfangenen Antwort seitens des Mobilfunknetzes, vorzugsweise unter Nutzung von seitens des Mobilfunknetzes erfassten nutzerindividuellen verhaltens- und/oder ereignisbezogenen Daten des Nutzers des Endgerätes;
- Senden der ausgewerteten und/oder aufbereiteten Antwortdaten der wenigstens einen Antwort von dem Mobilfunknetz an das Endgerät mittels eines Kommunikationsdienstes des Mobilfunknetzes unter Nutzung der dem Nutzer des Endgerätes seitens des Mobilfunknetzes eindeutig zugeordneten Nutzerkennung.

Die Erfindung macht sich vorteilhafterweise die Erkenntnis zu Nutze, dass durch die erfindungsgemäße Auswertung und/oder Aufbereitung der Antwortdaten der Antwort, insbesondere bei Nutzung von nutzerindividuellen verhaltens- und/oder ereignisbezogenen Daten des Nutzers des Endgerätes eine verbesserte nutzerindividualisierte Antwortlieferung erzielbar ist. Nutzer werden entsprechende Anfragen aufgrund der verbesserten und nutzerindividuelleren Antwortlieferung vorteilhafterweise eher und/oder häufiger nutzen, da die Ergebnisse höherwertiger sind.

Vorteilhafterweise werden im Rahmen der zumindest teilautomatischen Auswertung und/oder Aufbereitung der Antwortdaten der wenigstens einen empfangenen Antwort unter Nutzung der dem Nutzer des Endgerätes seitens des Mobilfunknetzes eindeutig zugeordneten Nutzerkennung von bzw. aus einer nutzerindividuelle verhaltens- und/oder ereignisbezogenen Daten des Nutzers des Endgerätes bereithaltenden Datenbank des Mobilfunknetzes abgerufen und genutzt, wobei in der Datenbank des Mobilfunknetzes die nutzerindividuellen verhaltens- und/oder ereignisbezogenen Daten des Nutzers des Endgerätes der dem Nutzer des Endgerätes seitens des Mobilfunknetzes eindeutig zugeordneten Nutzerkennung zugeordnet sind.

Eine weitere vorteilhafte Ausgestaltung der Erfindung sieht vor, dass mit dem Senden der ausgewerteten und/oder aufbereiteten Antwortdaten der wenigstens einen Antwort von dem Mobilfunknetz an das Endgerät mittels eines Kommunikationsdienstes des Mobilfunknetzes unter Nutzung der dem Nutzer des Endgerätes seitens des Mobilfunknetzes eindeutig zugeordneten Nutzerkennung ferner Werbeinformationen an das Endgerät mittels eines Kommunikationsdienstes des Mobilfunknetzes unter Nutzung der dem Nutzer des Endgerätes seitens des Mobilfunknetzes eindeutig zugeordneten Nutzerkennung gesendet werden, wenn die seitens des Mobilfunknetzes empfange Antwort der wenigstens einen über das Kommunikationsnetzwerk erreichbaren Datenquelle von einer Datenquelle seitens des Kommunikationsnetzwerks gesendet wurde, deren Betreiber in einer wirtschaftlichen, organisatorischen und/oder vertraglichen Verbindung mit dem Betreiber des Mobilfunknetzes steht.

Vorteilhafterweise wird die Werbeinformation in Abhängigkeit von den Anfragedaten der Anfrage, den für eine Anreicherung der Anfragedaten vorgesehenen nutzerindividuellen personenbezogenen Daten des Nutzers des Endgerätes und/oder den für eine Auswertung und/oder Aufbereitung vorgesehenen nutzerindividuellen verhaltens- und/oder ereignisbezogenen Daten des Nutzers des Endgerätes ausgewählt wird.

In einer weiteren vorteilhaften Ausgestaltung der Erfindung umfassen die nutzerindividuellen personenbezogenen Daten des Nutzers des Endgerätes Informationen hinsichtlich des Geschlechts des Nutzers, Informationen hinsichtlich des Alters des Nutzers und/oder Informationen hinsichtlich des Lebensmittelpunkts des Nutzers, wobei die Informationen hinsichtlich des Lebensmittelpunkts des Nutzers vorzugsweise aus dem zugehörigen Heimatregister des Mobilfunknetzes, in welchem die dem Nutzer des Endgerätes die seitens des Mobilfunknetzes eindeutig zugeordnete Nutzerkennung verwaltet ist, bestimmt werden.

In einer weiteren vorteilhaften Ausgestaltung der Erfindung umfassen die nutzerindividuellen verhaltens- und/oder ereignisbezogenen Daten des Nutzers des Endgerätes Informationen auf Basis der von dem Nutzer des Endgerätes ausgeführter Aktionen und/oder deren Ergebnisse, vorzugsweise sogenannte Shopping-Profile, Surf-Profile, Such-Profile und/oder dergleichen Nutzer-Profile.

Vorteilhafterweise wird als eindeutige Nutzerkennung des Nutzers in dem Mobilfunknetz die MSISDN und/oder die IMSI des Teilnehmers genutzt.

Gegenstand der vorliegenden Erfindung ist ferner ein Netzknoten in einem Mobilfunknetz, vorzugsweise einem Mobilfunknetz gemäß einem GSM-, GPRS-und/oder UMTS-Funknetzstandard, welcher an einer zumindest teilautomatisch erfolgenden Erzeugung wenigstens einer Anfrage an wenigstens eine über ein Kommunikationsnetzwerk erreichbare Datenquelle und/oder an einer zumindest teilautomatisch erfolgenden Übermittlung wenigstens einer Antwort wenigstens einer über ein Kommunikationsnetzwerk erreichbaren Datenquelle auf eine erfindungsgemäß erfolgende Anfrage zumindest teilweise beteiligt ist, wobei der Netzknoten ausgebildet und/oder eingerichtet ist ein erfindungsgemäßes Verfahren zumindest teilweise auszuführen.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer schematischen Übersichtsdarstellung ein Ausführungsbeispiel für eine erfindungsgemäße Anfrageerzeugung;
- Fig. 2: in einer schematischen Darstellung den Ablaufplan eines Ausführungsbeispiels für eine erfindungsgemäße Anfrageerzeugung;
- Fig. 3: in einer schematischen Übersichtsdarstellung ein Ausführungsbeispiel für eine erfindungsgemäße Antwortübermittlung;
- Fig.4: in einer schematischen Darstellung den Ablaufplan eines Ausführungsbeispiels für eine erfindungsgemäße Antwortübermittlung; und
- Fig. 5: in einer schematischen Übersichtsdarstellung ein weiteres Ausführungsbeispiel für eine erfindungsgemäße Anfrageerzeugung und Antwortübermittlung.

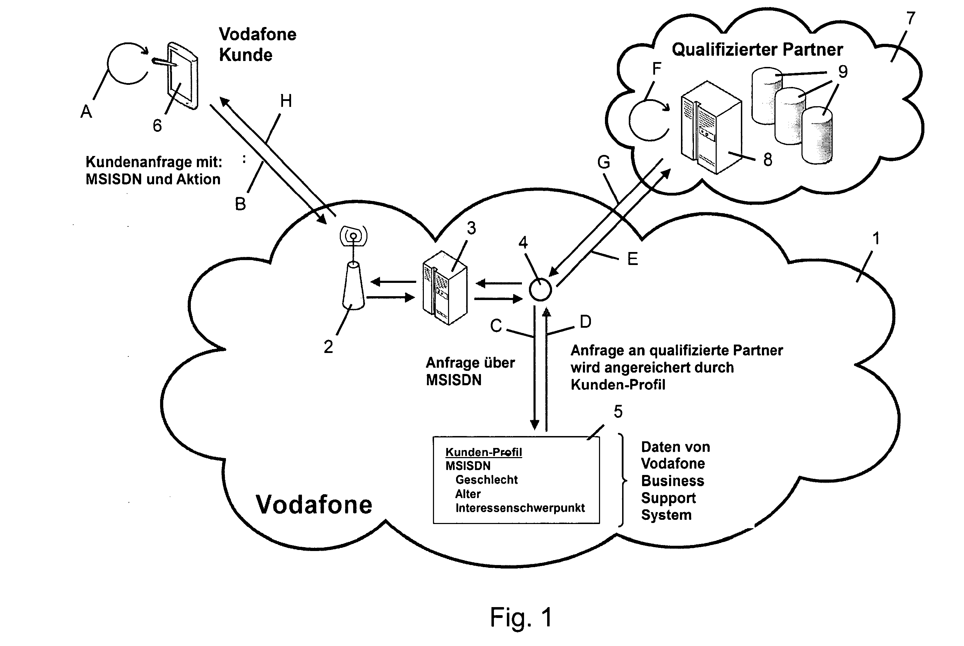

Fig. 1 zeigt ein schematisch als Wolke dargestelltes Mobilfunknetz 1, vorliegend einem Mobilfunknetz gemäß einem GSM-, GPRS- und/oder UMTS-Funknetzstandard. Von den das Mobilfunknetz 1 ausbildenden Systemen und Einrichtungen sind in Fig. 1 exemplarisch eine Sende- und/oder Empfangseinrichtung 2, vorliegend eine sogenannte Basisstation (BTS: Base Transceiver Station) bzw. ein sogenannter Basisstations-Controller (BSC: Base Station Controller), eine Recheneinrichtung (Server) 3, eine sogenannte Übergangseinheit (Gateway) 4 dargestellt. Das Gateway 4 realisiert dabei eine Protokollumsetzung zwischen dem Mobilfunknetz 1 und einem Kommunikationsnetzwerk 7, vorliegend dem Internet 7, insbesondere um eine Kommunikation zwischen Einrichtungen des Mobilfunknetzes 1 und Einrichtungen des Internets 7, die in der Regel unterschiedliche Netzprotokolle verwenden, zu ermöglichen. Von den das Internet 7 ausbildenden Systemen und Einrichtungen sind in Fig. 1 exemplarisch eine Recheneinrichtung (Server) 8 und verschiedene Datenbanken 9 dargestellt, welches als Datenquellen dienen. Fig. 1 zeigt ferner ein in dem Mobilfunknetz 1 betreibbares mobiles Endgerät 6 eines Nutzers.

Vorliegend sind Endgerät 6 des Nutzers als auch die jeweils beteiligten Einrichtungen des Mobilfunknetzes 1 so ausgebildet bzw. eingerichtet, dass der Nutzer des Endgerätes 6 mit dem Endgerät 6 über das Mobilfunknetz 1 Zugang zum bzw. Zugriff auf das Internet 7 erhält.

Im Rahmen der erfindungsgemäßen Erzeugung einer Anfrage an wenigstens eine über das Internet 7 erreichbare Datenquelle, vorliegend beispielsweise dem Server 8 mit den Datenbanken 9, wird eine Anfragedaten umfassende Anfrage des Nutzers des Endgerätes 6 seitens des Endgerätes 6 erfasst. Die Erfassung der Anfragedaten umfassenden Anfrage des Nutzers des Endgerätes 6, welche vorzugsweise durch eine Eingabe der Anfragedaten der Anfrage seitens eines entsprechenden Menüs bzw. einer entsprechenden Funktionalität seitens des Endgerätes 6 realisiert wird, ist in Fig. 1 durch den mit dem Bezugszeichen A gekennzeichneten Pfeil symbolisch dargestellt. In Verfahrensschritt B wird die seitens des Endgerätes 6 des Nutzers erfasste Anfrage mit bzw. unter Nutzung einer dem Nutzer des Endgerätes 6 seitens des Mobilfunknetzes 1 eindeutig zugeordneten Nutzerkennung, vorliegend vorzugsweise der MSISDN, von dem Endgerät 6 an das Mobilfunknetz 1 gesendet.

Seitens des Mobilfunknetzes 1 ist erfindungsgemäß eine Datenbank 5 vorgesehen, in der Nutzer-Profile (Customer-Profile) von Kunden des Betreibers des Mobilfunknetzes erfasst sind. Die Customer-Profile sind dabei vorliegend von dem Betreiber des Mobilfunknetzes 1 erstellt. Die Customer-Profile in der Datenbank 5 beinhalten dabei erfindungsgemäß nutzerindividuelle personenbezogene Daten des Nutzers des jeweiligen Endgerätes, vorliegend vorzugsweise Informationen hinsichtlich des Geschlechts des Nutzers, Informationen hinsichtlich des Alters des Nutzers und/oder Informationen hinsichtlich des Lebensmittelpunkts des Nutzers. Erfindungsgemäß erfolgt seitens der Datenbank 5 eine Zuordnung der Customer-Profile auf Basis der dem jeweiligen Nutzer eines Endgerätes von dem Mobilfunknetz 1 zugeordneten bzw. zugewiesenen MSISDN.

Unter Nutzung der MSISDN des Nutzers des Endgerätes 6, welche in der seitens des Mobilfunknetzes 1 eingehenden Anfrage (Verfahrensschritt B) enthalten ist, wird seitens des Mobilfunknetzes 1 abgefragt (Verfahrensschritt C), ob zu dem Nutzer des Endgerätes 6 ein Customer-Profil mit nutzerindividuellen personenbezogenen Daten des Nutzers des Endgerätes 6 in der Datenbank 5 vorhanden ist. Sofern dies der Fall ist, werden die nutzerindividuellen personenbezogenen Daten des Nutzers des Endgerätes 6 automatisch abgerufen und zur Anreicherung der Anfragedaten der von dem Nutzer des Endgerätes 6 an die Datenquelle im Internet 7 gerichteten Anfrage genutzt (Verfahrensschritt D).

Bei dem in Fig. 1 dargestellten Ausführungsbeispiel erfolgt eine erfindungsgemäße Anreicherung der Anfragedaten der Anfrage mit den seitens des Mobilfunknetzes 1 erfassten nutzerindividuellen personenbezogenen Daten des Nutzers (Customer-Profile) des Endgerätes 6 nur, wenn die seitens des Endgerätes 6 des Nutzers erfasste Anfrage (Verfahrensschritt A) an eine Datenquelle seitens des Internets 7 gerichtet werden soll, deren Betreiber in einer wirtschaftlichen, organisatorischen und/oder vertraglichen Verbindung mit dem Betreiber des Mobilfunknetzes 1 steht, sogenannte qualifizierte Partner (Qualified Partner). Die erfindungsgemäß entsprechend mit den nutzerindividuellen personenbezogenen Daten des Nutzers des Endgerätes 6 angereicherte Anfrage wird dann in dem von dem Mobilfunknetz 1 an die über das Internet 7 erreichbare Datenquelle, vorliegend dem Server 8 mit Datenbanken 9, gesendet (Verfahrensschritt E). Erfindungsgemäß wird dabei seitens des Mobilfunknetzes 1 sichergestellt, dass die an die Datenquelle im Internet 7 gerichtete angereicherte Anfrage gemäß Verfahrensschritt E keine Informationen enthält, die eine Identifizierung des Nutzers 6 seitens des Internets 7 zu lässt. In der konkreten Realisierung wird vorliegend sicher gestellt, dass die Anfrage gemäß Verfahrensschritt E nicht die MSISDN des Nutzers des Endgerätes 6 aufweist.

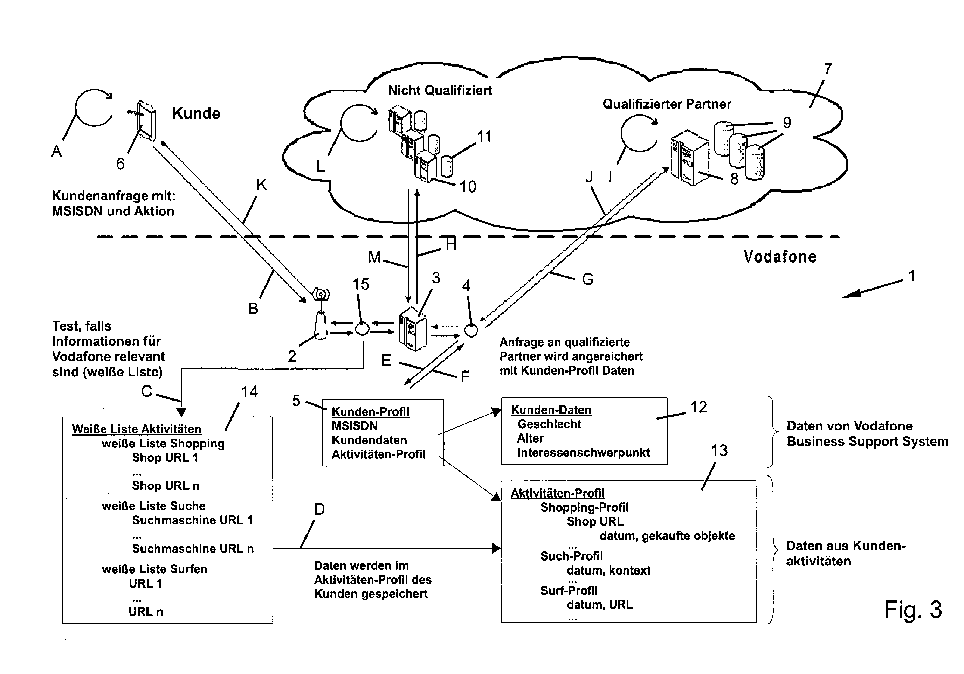

Soll die erfasste Anfrage an eine Datenquelle seitens des Internets 7 gerichtet werden, deren Betreiber in keiner wirtschaftlichen, organisatorischen und/oder vertraglichen Verbindung mit dem Betreiber des Mobilfunknetzes 1 steht, sogenannte Unqualifizierte (Not Qualified), wird die Anfrage ohne Anreicherung der Anfragedaten mit den seitens des Mobilfunknetzes 1 erfassten nutzerindividuellen personenbezogenen Daten des Nutzers (Customer-Profile) des Endgerätes 6 an die unqualifizierte Datenquelle des Internets 7 gesendet (in Fig. 1 nicht explizit dargestellt, siehe dazu aber auch Fig. 3). Auch hier wird erfindungsgemäß zweckmäßigerweise sicher gestellt, dass die Anfrage gemäß Verfahrensschritt E nicht die MSISDN des Nutzers des Endgerätes 6 aufweist.

Auf die vom Mobilfunknetz 1 an die Datenquelle 8, 9 seitens des Internets 7 gerichtete angereicherte Anfrage gemäß Verfahrensschritt E ermittelt der Server 8 aus den Datenbanken 9 seitens des Internets 7 eine Antwortdaten umfassende Antwort (Verfahrensschritt F) und sendet diese von dem Internet 7 an das Mobilfunknetz 1 (Verfahrensschritt G). Die Antwortdaten der Antwort werden dann seitens des Mobilfunknetzes 1 ausgewertet und/oder aufbereitet und die so ausgewertete und/oder aufbereitete Antwort wird dann von dem Mobilfunknetz 1 unter Nutzung der dem Nutzer des Endgerätes 6 seitens des Mobilfunknetzes 1 eindeutig zugeordneten MSISDN an das Endgerät 6 mittels eines Kommunikationsdienstes des Mobilfunknetzes übermittelt (Verfahrensschritt H).

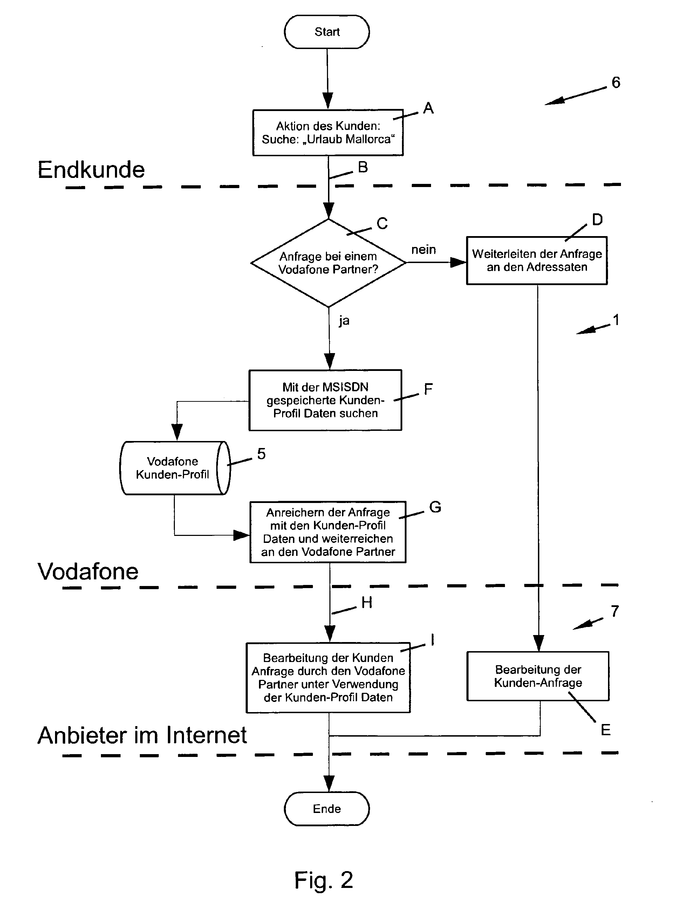

Fig. 2 zeigt den Ablaufplan eines Ausführungsbeispiels für eine erfindungsgemäße Anfrageerzeugung. Die Anfrage wird dabei seitens des vorliegend als Endkunde bezeichneten Nutzers seitens seines Endgerätes 6 durch Eingabe erfasst (Verfahrensschritt A). Die Erfassung der Anfrage ist dabei eine Aktion des Kunden und umfasst vorliegend die Suche nach den als Anfragedaten dienenden Begriffen "Urlaub Mallorca".

Die Anfrage wird dann das Mobilfunknetzes 1 gesendet (Verfahrensschritt B). Seitens des Mobilfunknetzes 1 wird anhand der empfangenen Anfrage (Verfahrensschritt B) überprüft, ob die Anfrage an eine Datenquelle seitens des Internets 7 gerichtet werden soll, deren Betreiber in einer wirtschaftlichen, organisatorischen und/oder vertraglichen Verbindung mit dem Betreiber des Mobilfunknetzes 1 steht, sogenannte qualifizierte Partner (Qualified Partner) (Verfahrensschritt C).

Ist dies nicht der Fall, wird die Anfrage ohne eine Anreicherung der Anfragedaten der Anfrage nach Verfahrensschritt B mit seitens des Mobilfunknetzes 1 erfassten nutzerindividuellen personenbezogenen Daten des Nutzers (Customer-Profile) des Endgerätes 6 an den die Datenquelle 8, 9 bereithaltenden Anbieter im Internet 7, vorliegend einem sogenannten Unqualifizierten (Not Qualified) weitergeleitet (Verfahrensschritt D) und die Anfrage nach Verfahrensschritt B dort bearbeitet (Verfahrensschritt E).

Sofern die Anfrage an eine Datenquelle seitens des Internets 7 gerichtet werden soll, deren Betreiber in einer wirtschaftlichen, organisatorischen und/oder vertraglichen Verbindung mit dem Betreiber des Mobilfunknetzes 1 steht, sogenannte qualifizierte Partner (Qualified Partner), wird seitens des Mobilfunknetzes 1 ausgehend von Verfahrensschritt C in Verfahrensschritt F unter Nutzung der MSISDN des Nutzers bzw. dessen Endgerätes 6, welche in der seitens des Mobilfunknetzes 1 eingehenden Anfrage (Verfahrensschritt B) enthalten ist, die seitens des Mobilfunknetzes 1 eingerichtete und unterhaltene, ein Customer-Profil mit nutzerindividuellen personenbezogenen Daten des Nutzers des Endgerätes 6 bereithaltende Datenbank 5 abgefragt. In Verfahrensschritt G werden die Anfragedaten der Anfrage nach Verfahrensschritt B dann mit den mit nutzerindividuellen personenbezogenen Daten des Nutzers des Endgerätes 6 gemäß dem Customer-Profil in der Datenbank 5 angereichert. Die angereicherte Anfrage wird dann von dem Mobilfunknetz 1 ohne die dem Nutzer des Endgerätes 6 seitens des Mobilfunknetzes 1 eindeutig zugeordneten Nutzerkennung, vorliegend also ohne die MSISDN des Nutzers des Endgerätes 6, an die Datenquelle des qualifizierten Partners (Qualified Partner) seitens des Internets 7, welcher in einer wirtschaftlichen, organisatorischen und/oder vertraglichen Verbindung mit dem Betreiber des Mobilfunknetzes 1 steht, gesendet (Verfahrensschritt H). Seitens des qualifizierten Partners (Qualified Partner) erfolgt dann eine Bearbeitung der in Verfahrensschritt G angereicherten Anfrage des Nutzers des Endgerätes 6 unter Verwendung der nutzerindividuellen personenbezogenen Daten des Nutzers des Endgerätes 6 gemäß dem Customer-Profil in der Datenbank 5.

Bei dem Ausführungsbeispiel der Erfindung nach Fig. 3 erfolgt zusätzlich zu der erfindungsgemäßen Verfahrensweise gemäß dem Ausführungsbeispiel nach Fig. 1 eine Auswertung der Informationen in der Antwort auf die Anfrage. Im Rahmen der erfindungsgemäßen Erzeugung einer Anfrage an wenigstens eine über das Internet 7 erreichbare Datenquelle, vorliegend beispielsweise dem Server 8 mit den Datenbanken 9 eines qualifizierten Partners (Qualified Partner) oder einem Server 10 mit Datenbank 11 eines Unqualifizierten (Not Qualified), wird eine Anfragedaten umfassende Anfrage des Nutzers des Endgerätes 6 seitens des Endgerätes 6 erfasst. Die Erfassung der Anfragedaten umfassenden Anfrage des Nutzers des Endgerätes 6, welche vorzugsweise durch eine Eingabe der Anfragedaten der Anfrage seitens eines entsprechenden Menüs bzw. einer entsprechenden Funktionalität seitens des Endgerätes 6 realisiert wird, ist in Fig. 3 durch den mit dem Bezugszeichen A gekennzeichneten Pfeil symbolisch dargestellt. In Verfahrensschritt B wird die seitens des Endgerätes 6 des Nutzers erfasste Anfrage mit bzw. unter Nutzung einer dem Nutzer des Endgerätes 6 seitens des Mobilfunknetzes 1 eindeutig zugeordneten Nutzerkennung, vorliegend vorzugsweise der MSISDN, von dem Endgerät 6 an das Mobilfunknetz 1 gesendet.

Seitens des Mobilfunknetzes 1 ist dabei eine Einrichtung 15 vorgesehen, welche in Verfahrensschritt C überprüft, ob die Informationen die im Zusammenhang mit der Anfrage des Nutzers des Endgerätes 6 stehen für eine weitergehende erfindungsgemäße Auswertung von Interesse bzw. relevant sind. Für diese Überprüfung ist seitens des Mobilfunknetzes 1 in einer Datenbank 14 eine sogenannte Activity-Whitelist eingerichtet und unterhalten, in welcher von Nutzern von Endgeräten durchführbare Aktionen erfasst sind, die für die erfindungsgemäße weitergehende Auswertung relevant sind bzw. sein können. Die sogenannte Activity-Whitelist in der Datenbank 14 umfasst vorliegend beispielsweise eine sogenannte Shopping-Whitelist mit Internetadressen (URLs) von Shops im Internet 7, eine sogenannte Search-Whitelist mit Internetadressen (URLs) von Suchmaschinen im Internet 7 und eine sogenannte Surf-Whitelist mit Internetadressen (URLs) von Internetseiten.

Beinhaltet die Anfrage des Nutzers des Endgerätes 6 eine Aktivität entsprechend der Activity-Whitelist 14, werden entsprechende Informationen bezüglich der Aktivität des Nutzers des Endgerätes 6 in einem sogenannten Activity-Profil 13 des Nutzers des Endgerätes 6 erfasst (Verfahrensschritt D). Vorliegend ist das Activity-Profil 13 Bestandteil des Customer-Profiles des Nutzers des Endgerätes 6 in einer Datenbank 5 des Mobilfunknetzes 1 oder mit diesem verknüpft. Die Customer-Profile der Nutzer von Endgeräten sind dabei vorliegend von dem Betreiber des Mobilfunknetzes 1 erstellt. Das Customer-Profile 5 bei dem Ausführungsbeispiel nach Fig. 3 umfasst neben der MSISDN und dem Activity-Profil 13 mit Daten bzw. Informationen bezüglich der nutzerindividuellen Aktivitäten des Nutzers des Endgerätes 6 ferner Kunden- bzw. Nutzerdaten (Customer Data) 12, welche vorliegend vorzugsweise Informationen hinsichtlich des Geschlechts des Nutzers, Informationen hinsichtlich des Alters des Nutzers und/oder Informationen hinsichtlich des Lebensmittelpunkts des Nutzers umfassen. Erfindungsgemäß erfolgt seitens der Datenbank 5 eine Zuordnung der Customer-Profile auf Basis der dem jeweiligen Nutzer eines Endgerätes von dem Mobilfunknetz 1 zugeordneten bzw. zugewiesenen MSISDN.

Unter Nutzung der MSISDN des Nutzers des Endgerätes 6, welche in der seitens des Mobilfunknetzes 1 eingehenden Anfrage (Verfahrensschritt B) enthalten ist, wird seitens des Mobilfunknetzes 1 abgefragt (Verfahrensschritt E), ob zu dem Nutzer des Endgerätes 6 ein Customer-Profil mit nutzerindividuellen personenbezogenen Daten des Nutzers des Endgerätes 6 und/oder nutzerindividuellen aktivitäts- bzw. ereignisbezogenen Daten des Nutzers des Endgerätes 6 in der Datenbank 5 vorhanden ist. Sofern dies der Fall ist, werden die nutzerindividuellen personenbezogenen Daten des Nutzers des Endgerätes 6 und/oder nutzerindividuellen aktivitäts- bzw. ereignisbezogenen Daten des Nutzers des Endgerätes 6 automatisch abgerufen und zur Anreicherung der Anfragedaten der von dem Nutzer des Endgerätes 6 an die Datenquelle im Internet 7 gerichteten Anfrage genutzt (Verfahrensschritt F).

Bei dem in Fig. 3 dargestellten Ausführungsbeispiel erfolgt eine erfindungsgemäße Anreicherung der Anfragedaten der Anfrage mit den seitens des Mobilfunknetzes 1 erfassten nutzerindividuellen personenbezogenen Daten des Nutzers (Customer-Data) des Endgerätes 6 und/oder nutzerindividuellen aktivitäts- bzw. ereignisbezogenen Daten (Activity-Profile) des Nutzers des Endgerätes 6 nur, wenn die seitens des Endgerätes 6 des Nutzers erfasste Anfrage (Verfahrensschritt A) an eine Datenquelle seitens des Internets 7 gerichtet werden soll, deren Betreiber in einer wirtschaftlichen, organisatorischen und/oder vertraglichen Verbindung mit dem Betreiber des Mobilfunknetzes 1 steht, sogenannte qualifizierte Partner (Qualified Partner). Die erfindungsgemäß entsprechend mit den nutzerindividuellen personenbezogenen Daten des Nutzers des Endgerätes 6 und/oder mit den nutzerindividuellen aktivitäts- bzw. ereignisbezogenen Daten des Nutzers des Endgerätes 6 angereicherte Anfrage wird dann in dem von dem Mobilfunknetz 1 an die über das Internet 7 erreichbare Datenquelle, vorliegend dem Server 8 mit Datenbanken 9, gesendet (Verfahrensschritt G). Erfindungsgemäß wird dabei seitens des Mobilfunknetzes 1 sichergestellt, dass die an die Datenquelle im Internet 7 gerichtete angereicherte Anfrage gemäß Verfahrensschritt E keine Informationen enthält, die eine Identifizierung des Nutzers 6 seitens des Internets 7 zu lässt. In der konkreten Realisierung wird vorliegend sicher gestellt, dass die Anfrage gemäß Verfahrensschritt G nicht die MSISDN des Nutzers des Endgerätes 6 aufweist.

Soll die erfasste Anfrage an eine Datenquelle, vorliegend Server 10 mit Datenbank 11, seitens des Internets 7 gerichtet werden, deren Betreiber in keiner wirtschaftlichen, organisatorischen und/oder vertraglichen Verbindung mit dem Betreiber des Mobilfunknetzes 1 steht, sogenannte Unqualifizierte (Not Qualified), wird die Anfrage ohne Anreicherung der Anfragedaten mit den seitens des Mobilfunknetzes 1 erfassten nutzerindividuellen personenbezogenen Daten des Nutzers (Customer-Data) des Endgerätes 6 und/oder nutzerindividuellen aktivitäts- bzw. ereignisbezogenen Daten des Nutzers (Activity-Profile) des Endgerätes 6 an die unqualifizierte Datenquelle 10, 11 des Internets 7 gesendet (Verfahrensschritt. Auch hier wird erfindungsgemäß zweckmäßigerweise sicher gestellt, dass die Anfrage gemäß Verfahrensschritt E nicht die MSISDN des Nutzers des Endgerätes 6 aufweist.

Auf eine vom Mobilfunknetz 1 an die Datenquelle 8, 9 seitens des Internets 7 gerichtete angereicherte Anfrage gemäß Verfahrensschritt G ermittelt der Server 8 aus den Datenbanken 9 seitens des Internets 7 eine Antwortdaten umfassende Antwort (Verfahrensschritt I) und sendet diese von dem Internet 7 an das Mobilfunknetz 1 (Verfahrensschritt J). Die Antwortdaten der Antwort werden dann seitens des Mobilfunknetzes 1 ausgewertet und/oder aufbereitet und die so ausgewertete und/oder aufbereitete Antwort wird dann von dem Mobilfunknetz 1 unter Nutzung der dem Nutzer des Endgerätes 6 seitens des Mobilfunknetzes 1 eindeutig zugeordneten MSISDN an das Endgerät 6 mittels eines Kommunikationsdienstes des Mobilfunknetzes übermittelt (Verfahrensschritt K).

Auf eine vom Mobilfunknetz 1 an die Datenquelle 10, 11 seitens des Internets 7 gerichtete nicht angereicherte Anfrage gemäß Verfahrensschritt H ermittelt der Server 10 aus der Datenbanken 11 seitens des Internets 7 eine Antwortdaten umfassende Antwort (Verfahrensschritt L) und sendet diese von dem Internet 7 an das Mobilfunknetz 1 (Verfahrensschritt M). Die Antwort wird dann von dem Mobilfunknetz 1 unter Nutzung der dem Nutzer des Endgerätes 6 seitens des Mobilfunknetzes 1 eindeutig zugeordneten MSISDN an das Endgerät 6 mittels eines Kommunikationsdienstes des Mobilfunknetzes übermittelt (Verfahrensschritt K).

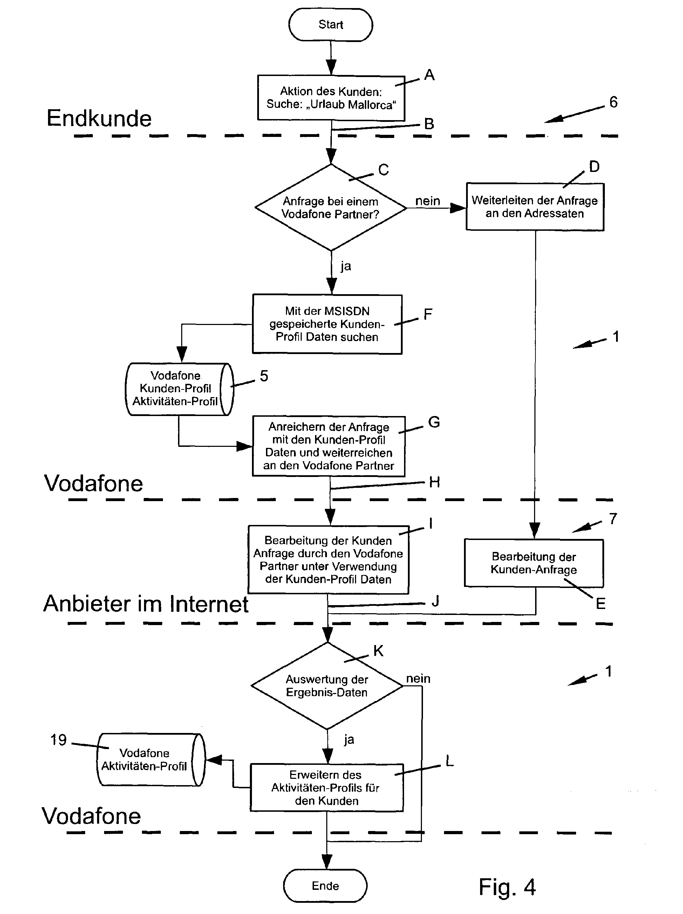

Fig. 4 zeigt den Ablaufplan eines Ausführungsbeispiels für eine erfindungsgemäße Anfrageerzeugung bei der zusätzlich eine Auswertung der Informationen in der Antwort auf die Anfrage erfolgt. Die Anfrage wird dabei seitens des vorliegend als Endkunde bezeichneten Nutzers seitens seines Endgerätes 6 durch Eingabe erfasst (Verfahrensschritt A). Die Erfassung der Anfrage ist dabei eine Aktion des Kunden und umfasst vorliegend die Suche nach den als Anfragedaten dienenden Begriffen "Urlaub Mallorca".

Die Anfrage wird dann das Mobilfunknetzes 1 gesendet (Verfahrensschritt B). Seitens des Mobilfunknetzes 1 wird anhand der empfangenen Anfrage (Verfahrensschritt B) überprüft, ob die Anfrage an eine Datenquelle seitens des Internets 7 gerichtet werden soll, deren Betreiber in einer wirtschaftlichen, organisatorischen und/oder vertraglichen Verbindung mit dem Betreiber des Mobilfunknetzes 1 steht, sogenannte qualifizierte Partner (Qualified Partner) (Verfahrensschritt C).

Ist dies nicht der Fall, wird die Anfrage ohne eine Anreicherung der Anfragedaten der Anfrage nach Verfahrensschritt B mit seitens des Mobilfunknetzes 1 erfassten nutzerindividuellen personenbezogenen Daten des Nutzers (Customer-Profile) des Endgerätes 6, welche vorliegend in einer Datenbank 5 des Mobilfunknetzes 1 erfasst sind, an den die Datenquelle 8, 9 bereithaltenden Anbieter im Internet 7, vorliegend einem sogenannten Unqualifizierten (Not Qualified) weitergeleitet (Verfahrensschritt D) und die Anfrage nach Verfahrensschritt B dort bearbeitet (Verfahrensschritt E).

Sofern die Anfrage an eine Datenquelle seitens des Internets 7 gerichtet werden soll, deren Betreiber in einer wirtschaftlichen, organisatorischen und/oder vertraglichen Verbindung mit dem Betreiber des Mobilfunknetzes 1 steht, sogenannte qualifizierte Partner (Qualified Partner), wird seitens des Mobilfunknetzes 1 ausgehend von Verfahrensschritt C in Verfahrensschritt F unter Nutzung der MSISDN des Nutzers bzw. dessen Endgerätes 6, welche in der seitens des Mobilfunknetzes 1 eingehenden Anfrage (Verfahrensschritt B) enthalten ist, die seitens des Mobilfunknetzes 1 eingerichtete und unterhaltene, ein Customer-Profil mit nutzerindividuellen personenbezogenen Daten des Nutzers des Endgerätes 6 bereithaltende Datenbank 5 abgefragt. In Verfahrensschritt G werden die Anfragedaten der Anfrage nach Verfahrensschritt B dann mit den mit nutzerindividuellen personenbezogenen Daten des Nutzers des Endgerätes 6 gemäß dem Customer-Profil in der Datenbank 5 angereichert. Die angereicherte Anfrage wird dann von dem Mobilfunknetz 1 ohne die dem Nutzer des Endgerätes 6 seitens des Mobilfunknetzes 1 eindeutig zugeordneten Nutzerkennung, vorliegend also ohne die MSISDN des Nutzers des Endgerätes 6, an die Datenquelle des qualifizierten Partners (Qualified Partner) seitens des Internets 7, welcher in einer wirtschaftlichen, organisatorischen und/oder vertraglichen Verbindung mit dem Betreiber des Mobilfunknetzes 1 steht, gesendet (Verfahrensschritt H). Seitens des qualifizierten Partners (Qualified Partner) erfolgt dann eine Bearbeitung der in Verfahrensschritt G angereicherten Anfrage des Nutzers des Endgerätes 6 unter Verwendung der nutzerindividuellen personenbezogenen Daten des Nutzers des Endgerätes 6 gemäß dem Customer-Profil in der Datenbank 5.

In Verfahrensschritt J wird die Antwort auf die Anfrage nach Verfahrensschritt E von einem sogenannten Unqualifizierten (Not Qualified) im Internet 7 bzw. nach Verfahrensschritt I von einem sogenannten qualifizierten Partner (Qualified Partner) im Internet 7 an das Mobilfunknetz 1 gesendet.

Seitens des Mobilfunknetzes 1 erfolgt dann in Verfahrensschritt K eine erfindungsgemäße Auswertung der Informationen in der Antwort auf die Anfrage, wenn die Antwort von einem sogenannten qualifizierten Partner (Qualified Partner) im Internet 7 stammt (Verfahrensschritt I). Dann erfolgt in Verfahrensschritt L eine Erweiterung des Activity-Profiles in einer Datenbank 19 des Mobilfunknetzes 1, also insbesondere der nutzerindividuellen aktivitäts- bzw. ereignisbezogenen Daten des Nutzers (Activity-Profile) des Endgerätes 6 entsprechend der vorgenommenen Aktivität bzw. des erfolgten Ereignisses. Die Datenbank 19 kann auch Bestandteil der Datenbank 5 sein oder mit dieser verbindbar sein.

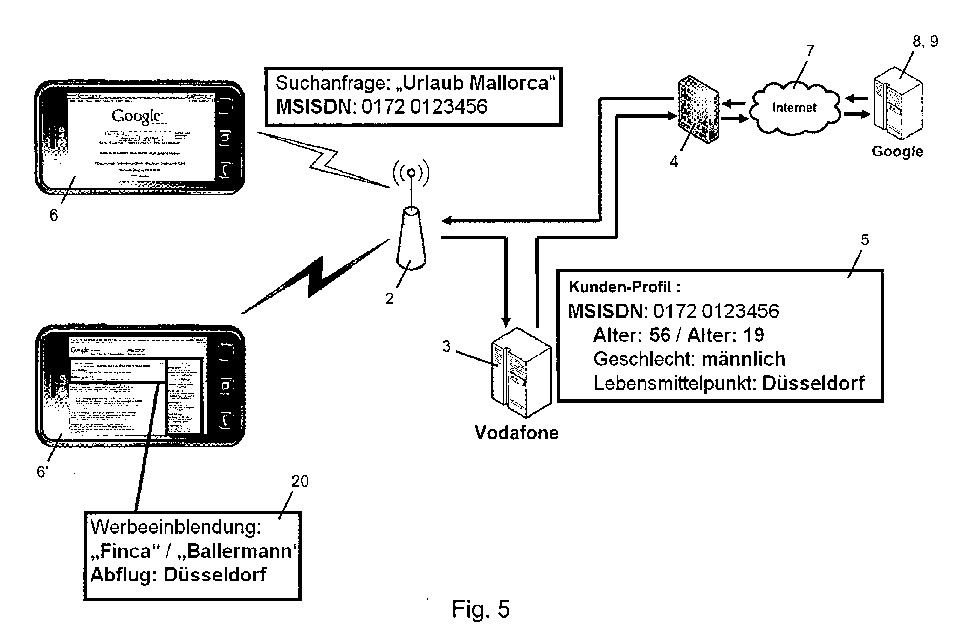

Bei dem in Fig. 5 schematisch dargestellten Ausführungsbeispiel einer erfindungsgemäßen Anfrageerzeugung und Antwortübermittlung, bei der die Anfrage an eine Datenquelle seitens des Internets 7 gerichtet wird, deren Betreiber, vorliegend beispielsweise die Google Inc., als sogenannte qualifizierter Partner (Qualified Partner) in einer wirtschaftlichen, organisatorischen und/oder vertraglichen Verbindung mit dem Betreiber des Mobilfunknetzes 1 steht, werden mit dem Senden der ausgewerteten und/oder aufbereiteten Antwortdaten der wenigstens einen Antwort von dem Mobilfunknetz 1 an das Endgerät 6 mittels eines Kommunikationsdienstes des Mobilfunknetzes 1 unter Nutzung der dem Nutzer des Endgerätes seitens des Mobilfunknetzes eindeutig zugeordneten Nutzerkennung, vorliegend beispielhaft der MSISDN 0172 0123456, ferner Werbeinformationen an das Endgerät mittels eines Kommunikationsdienstes des Mobilfunknetzes unter Nutzung MSISDN des Nutzers des Endgerätes 6 gesendet, wenn die seitens des Mobilfunknetzes empfange Antwort der über das Internet erreichbaren Datenquelle (Google) gesendet. Die Werbeinformation wird dabei in Abhängigkeit von den Anfragedaten der Anfrage, den für eine Anreicherung der Anfragedaten vorgesehenen nutzerindividuellen personenbezogenen Daten des Nutzers des Endgerätes und/oder den für eine Auswertung und/oder Aufbereitung vorgesehenen nutzerindividuellen verhaltens- und/oder ereignisbezogenen Daten des Nutzers des Endgerätes ausgewählt. Die Werbeinformationen 20 werden dann seitens des Endgerätes 6 bzw. 6' mit der Antwort wiedergegeben bzw. in der Antwort eingeblendet. In Fig. 5 ist der zeitliche Versatz zwischen der Anfrage und der Antwort bezüglich des Endgerätes 6 durch das Bezugszeichen 6' dargestellt.

Die in den Figuren der Zeichnung dargestellten und im Zusammenhang mit diesen beschriebenen Ausführungsbeispiele der Erfindung dienen lediglich der Erläuterung der Erfindung und sind für dies Erfindung nicht beschränkend.

### Bezugszeichenliste:

- 1: Mobilfunknetz
- 2: Sende-/Empfangseinrichtung (BTS/BSC) (Mobilfunknetz (1))
- 3: Recheneinrichtung/Server (Mobilfunknetz (1))
- 4: Übergangseinheit/Gateway (Mobilfunknetz (1))
- 5: Datenbank/Customer-Profile (Mobilfunknetz (1))
- 6, 6': mobiles Endgerät Nutzer/Kunde (Mobilfunknetz (1))
- 7: Kommunikationsnetzwerk/Internet
- 8: Recheneinrichtung/Server Qualified Partner (Kommunikationsnetzwerk/Internet (7))
- 9: Datenbank Qualified Partner (Kommunikationsnetzwerk/Internet (7))
- 10: Recheneinrichtung/Server Not Qualified (Kommunikationsnetzwerk/Internet (7))
- 11: Datenbank Not Qualified (Kommunikationsnetzwerk/Internet (7))
- 12: Datenbank/Customer Data (Mobilfunknetz (1))
- 13: Datenbank/Activity-Profile (Mobilfunknetz (1))
- 14: Datenbank/Activity Whitelist (Mobilfunknetz (1))
- 15: Einrichtung/Filtereinrichtung Activity-Whitelist (Mobilfunknetz (1))
- 19: Datenbank/Activity-Profile (Mobilfunknetz (1))
- 20: Werbeinformation/Werbeeinblendung
- A: Verfahrensschritt
- B: Verfahrensschritt
- C: Verfahrensschritt
- D: Verfahrensschritt
- E: Verfahrensschritt
- F: Verfahrensschritt
- G: Verfahrensschritt
- H: Verfahrensschritt
- I: Verfahrensschritt
- J: Verfahrensschritt
- K: Verfahrensschritt
- L: Verfahrensschritt
- M: Verfahrensschritt

## Patentansprüche

1. Verfahren zur zumindest teilautomatischen Erzeugung wenigstens einer Anfrage an wenigstens eine über ein Kommunikationsnetzwerk (7) erreichbare Datenquelle, wobei die wenigstens eine Anfrage von einem in einem Mobilfunknetz (1) betreibbaren Endgerät (6) mittels wenigstens eines Kommunikationsdienstes des Mobilfunknetzes (1) über das Mobilfunknetz (1) an die wenigstens eine Datenquelle gesendet wird,
**gekennzeichnet durch** die folgenden Verfahrensschritte:
- Erfassung wenigstens einer Anfragedaten umfassenden Anfrage seitens des Endgerätes (6);
- Senden der wenigstens einen erfassten Anfrage von dem Endgerät (6) an das Mobilfunknetz (1) unter Nutzung einer dem Nutzer des Endgerätes (6) seitens des Mobilfunknetzes (1) eindeutig zugeordneten Nutzerkennung;
- automatische Anreicherung der Anfragedaten der wenigstens einen Anfrage mit seitens des Mobilfunknetzes (1) erfassten nutzerindividuellen personenbezogenen Daten des Nutzers des Endgerätes (6) unter Nutzung der dem Nutzer des Endgerätes (6) seitens des Mobilfunknetzes (1) eindeutig zugeordneten Nutzerkennung;
- Senden der mit den nutzerindividuellen personenbezogenen Daten des Nutzers des Endgerätes (6) angereicherten Anfrage von dem Mobilfunknetz (1) an die wenigstens eine über das Kommunikationsnetzwerk (7) erreichbare Datenquelle.

2. Verfahren nach Anspruch 1, **dadurch gekennzeichnet, dass** im Rahmen der automatischen Anreicherung der Anfragedaten der wenigstens einen Anfrage nutzerindividuelle personenbezogene Daten des Nutzers des Endgerätes (6) unter Nutzung der dem Nutzer des Endgerätes (6) seitens des Mobilfunknetzes (1) eindeutig zugeordneten Nutzerkennung von bzw. aus einer nutzerindividuelle personenbezogene Daten des Nutzers des Endgerätes (6) bereithaltenden Datenbank (5) des Mobilfunknetzes (1) abgerufen und genutzt werden, wobei in der Datenbank (5) des Mobilfunknetzes (1) die nutzerindividuellen personenbezogenen Daten des Nutzers des Endgerätes (6) der dem Nutzer des Endgerätes (6) seitens des Mobilfunknetzes (1) eindeutig zugeordneten Nutzerkennung zugeordnet sind.

3. Verfahren nach Anspruch 1 oder Anspruch 2, **dadurch gekennzeichnet, dass** die mit den nutzerindividuellen personenbezogenen Daten des Nutzers des Endgerätes (6) angereicherte Anfrage von dem Mobilfunknetz (1) an die wenigstens eine über das Kommunikationsnetzwerk (7) erreichbare Datenquelle frei von der dem Nutzer des Endgerätes (6) seitens des Mobilfunknetzes (1) eindeutig zugeordneten Nutzerkennung gesendet wird.

4. Verfahren nach einem der Ansprüche 1 bis 3, **dadurch gekennzeichnet, dass** die Anfragedaten der wenigstens einen Anfrage mit den seitens des Mobilfunknetzes (1) erfassten nutzerindividuellen personenbezogenen Daten des Nutzers des Endgerätes (6) angereichert werden, wenn die seitens des Endgerätes (6) erfasste Anfrage an eine Datenquelle seitens des Kommunikationsnetzwerks (7) gerichtet werden soll, deren Betreiber in einer wirtschaftlichen, organisatorischen und/oder vertraglichen Verbindung mit dem Betreiber des Mobilfunknetzes (1) steht.

5. Verfahren zur zumindest teilautomatischen Übermittlung wenigstens einer Antwort wenigstens einer über ein Kommunikationsnetzwerk (7) erreichbaren Datenquelle auf eine Anfrage nach einem der Ansprüche 1 bis 4 über das Mobilfunknetz (1) an das in dem Mobilfunknetz (1) betreibbare Endgerät (6) des Nutzers mittels wenigstens eines Kommunikationsdienstes des Mobilfunknetzes (1),
**gekennzeichnet durch** die folgenden Verfahrensschritte:
- Empfang wenigstens einer Antwortdaten umfassenden Antwort seitens des Mobilfunknetzes (1);
- zumindest teilautomatische Auswertung und/oder Aufbereitung der Antwortdaten der wenigstens einen empfangenen Antwort seitens des Mobilfunknetzes (1), vorzugsweise unter Nutzung von seitens des Mobilfunknetzes (1) erfassten nutzerindividuellen verhaltens- und/oder ereignisbezogenen Daten des Nutzers des Endgerätes (6);
- Senden der ausgewerteten und/oder aufbereiteten Antwortdaten der wenigstens einen Antwort von dem Mobilfunknetz (1) an das Endgerät (6) mittels eines Kommunikationsdienstes des Mobilfunknetzes (1) unter Nutzung der dem Nutzer des Endgerätes (6) seitens des Mobilfunknetzes (1) eindeutig zugeordneten Nutzerkennung.

6. Verfahren nach Anspruch 5, **dadurch gekennzeichnet, dass** im Rahmen der zumindest teilautomatischen Auswertung und/oder Aufbereitung der Antwortdaten der wenigstens einen empfangenen Antwort unter Nutzung der dem Nutzer des Endgerätes (6) seitens des Mobilfunknetzes (1) eindeutig zugeordneten Nutzerkennung von bzw. aus einer nutzerindividuelle verhaltens- und/oder ereignisbezogenen Daten des Nutzers des Endgerätes (6) bereithaltenden Datenbank (5) des Mobilfunknetzes (1) abgerufen und genutzt werden, wobei in der Datenbank (5) des Mobilfunknetzes (1) die nutzerindividuellen verhaltens- und/oder ereignisbezogenen Daten des Nutzers des Endgerätes (6) der dem Nutzer des Endgerätes (6) seitens des Mobilfunknetzes (1) eindeutig zugeordneten Nutzerkennung zugeordnet sind.

7. Verfahren nach Anspruch 5 oder Anspruch 6, **dadurch gekennzeichnet, dass** mit dem Senden der ausgewerteten und/oder aufbereiteten Antwortdaten der wenigstens einen Antwort von dem Mobilfunknetz (1) an das Endgerät (6) mittels eines Kommunikationsdienstes des Mobilfunknetzes (1) unter Nutzung der dem Nutzer des Endgerätes (6) seitens des Mobilfunknetzes (1) eindeutig zugeordneten Nutzerkennung ferner Werbeinformationen (20) an das Endgerät (6) mittels eines Kommunikationsdienstes des Mobilfunknetzes (1) unter Nutzung der dem Nutzer des Endgerätes (6) seitens des Mobilfunknetzes (1) eindeutig zugeordneten Nutzerkennung gesendet werden, wenn die seitens des Mobilfunknetzes (1) empfange Antwort der wenigstens einen über das Kommunikationsnetzwerk erreichbaren Datenquelle (5) von einer Datenquelle seitens des Kommunikationsnetzwerks (7) gesendet wurde, deren Betreiber in einer wirtschaftlichen, organisatorischen und/oder vertraglichen Verbindung mit dem Betreiber des Mobilfunknetzes (1) steht.

8. Verfahren nach Anspruch 7, **dadurch gekennzeichnet, dass** die Werbeinformation in Abhängigkeit von den Anfragedaten der Anfrage, den für eine Anreicherung der Anfragedaten vorgesehenen nutzerindividuellen personenbezogenen Daten des Nutzers des Endgerätes (6) und/oder den für eine Auswertung und/oder Aufbereitung vorgesehenen nutzerindividuellen verhaltens- und/oder ereignisbezogenen Daten des Nutzers des Endgerätes (6) ausgewählt wird.

9. Verfahren nach einem der Ansprüche 1 bis 8, **dadurch gekennzeichnet, dass** die nutzerindividuellen personenbezogenen Daten des Nutzers des Endgerätes (6) Informationen hinsichtlich des Geschlechts des Nutzers, Informationen hinsichtlich des Alters des Nutzers und/oder Informationen hinsichtlich des Lebensmittelpunkts des Nutzers umfassen, wobei die Informationen hinsichtlich des Lebensmittelpunkts des Nutzers vorzugsweise aus dem zugehörigen Heimatregister (HLR) des Mobilfunknetzes (1), in welchem die dem Nutzer des Endgerätes (6) die seitens des Mobilfunknetzes (1) eindeutig zugeordnete Nutzerkennung verwaltet ist, bestimmt werden.

10. Verfahren nach einem der Ansprüche 1 bis 9, **dadurch gekennzeichnet, dass** die nutzerindividuellen verhaltens- und/oder ereignisbezogenen Daten des Nutzers des Endgerätes (6) Informationen auf Basis der von dem Nutzer des Endgerätes (6) ausgeführter Aktionen und/oder deren Ergebnisse umfassen, vorzugsweise Shopping-Profile, Surf-Profile, Such-Profile und/oder dergleichen Nutzer-Profile.

11. Verfahren nach einem der Ansprüche 1 bis 10, **dadurch gekennzeichnet, dass** als eindeutige Nutzerkennung des Nutzers in dem Mobilfunknetz (1) die MSISDN und/oder die IMSI des Teilnehmers genutzt wird.

12. Netzknoten (2) in einem Mobilfunknetz (1), vorzugsweise einem Mobilfunknetz (1) gemäß einem GSM-, GPRS- und/oder UMTS-Funknetzstandard, welcher an einer zumindest teilautomatisch erfolgenden Erzeugung wenigstens einer Anfrage an wenigstens eine über ein Kommunikationsnetzwerk (7) erreichbare Datenquelle und/oder an einer zumindest teilautomatisch erfolgenden Übermittlung wenigstens einer Antwort wenigstens einer über ein Kommunikationsnetzwerk (7) erreichbaren Datenquelle auf eine Anfrage nach einem der Ansprüche 1 bis 11 zumindest teilweise beteiligt ist, **dadurch gekennzeichnet, dass** dieser ausgebildet und/oder eingerichtet ist ein Verfahren nach einem der Ansprüche 1 bis 11 zumindest teilweise auszuführen.
